# EUROPÄISCHE PATENTSCHRIFT

(11) **EP 2 301 323 B1**
(45) Veröffentlichungstag und Bekanntmachung des Hinweises auf die Patenterteilung: **20.11.2019**
(21) Anmeldenummer: 10169677.1
(22) Anmeldetag: 15.07.2010
(51) Int. Cl.: A01D 89/00, A01F 15/00

(54) **Vorrichtung zur Überwachung der korrekten Funktion einer Erntegutaufnahmeeinrichtung**
Device for monitoring whether a harvested goods receptacle is functioning correctly
Dispositif de surveillance du fonctionnement correct d'un dispositif de réception de produits de récolte

(30) Priorität: 04.08.2009 DE 102009028227
(43) Veröffentlichungstag der Anmeldung: 30.03.2011
(73) Patentinhaber: Deere & Company, Moline, IL 61265 (US)
(72) Erfinder: Viaud, Jean, 01190, Reyssouze (FR)
(74) Vertreter: Holst, Sönke

(56) Entgegenhaltungen:
- EP-A1- 1 574 124
- EP-A2- 1 271 139
- DE-A1- 4 232 198
- US-A- 4 311 995
- US-A1- 2005 279 070

## Beschreibung

Die Erfindung betrifft eine Vorrichtung zur Überwachung der korrekten Funktion einer Erntegutaufnahmeeinrichtung, mit einem einen in Vorwärtsrichtung vor der Erntegutaufnahmeeinrichtung liegenden Bereich überwachenden, optischen Sensor, der mit einer Signalverarbeitungseinrichtung verbunden ist, sowie eine selbstfahrende Erntemaschine oder eine Kombination aus einem Zugfahrzeug mit einer Erntemaschine und einer derartigen Vorrichtung.

### Stand der Technik

Bei landwirtschaftlichen Erntemaschinen, die Erntegut von einem Feld aufnehmen, besteht die Gefahr, dass übermäßige, auf einmal aufgenommene Erntegutmengen zu einem Gutstau in der Erntemaschine führen. Außerdem sind Betriebssituationen möglich, bei denen die Erntegutaufnahmeeinrichtung das Erntegut nicht korrekt aufnimmt, sondern vor sich herschiebt. Die richtige Erntegutaufnahme wird bei selbstfahrenden Erntemaschinen, wie Mähdreschern und Feldhäckslern derzeit durch den Bediener überwacht, der von seinem Arbeitsplatz aus einen guten Überblick über den Erntevorsatz hat. Bei Ladewagen und Ballenpressen, die hinter einem Zugfahrzeug hergezogen werden und das Erntegut mit Gutaufnehmern aufnehmen, muss der Bediener sich von Zeit zu Zeit nach hinten wenden, um durch das Rückfenster der Kabine des Zugfahrzeugs, wenn vorhanden, einen Blick auf den Gutaufnehmer zu werfen und zu kontrollieren, ob das Erntegut korrekt aufgenommen wird. Diese Rückblicke sind auf Dauer relativ anstrengend und können zu ungewünschten Abweichungen vom sich entlang eines Schwads erstreckenden Fahrweg führen.

Zur Vermeidung von durch Gutstaus bedingten Schäden an der Erntemaschine sind Überlastkupplungen und Sensoren zur Erfassung des Drehmoments im Antriebsstrang der Einzugsförderer bekannt, die im Überlastfall den Antriebsstrang außer Betrieb setzen (vgl. DE 199 18 552 A1 und DE 102 41 216 A1). Diese Überlastkupplungen und Sensoren können aber erst wirksam werden, wenn bereits ein Gutstau in der Erntemaschine eingetreten ist und helfen nicht bei der Überwachung der korrekten Erntegutaufnahme.

Weiterhin sind auch Videoüberwachungssysteme mit Kameras und am Bedienerarbeitsplatz angebrachten Monitoren bekannt, wobei der Monitor beispielsweise am Kabinendach eines Schleppers angebracht sein kann, um den Gutaufnehmer eines Ladewagens zu überwachen (Zeitschrift Profi 2/2007, Seiten 64 bis 67). Dadurch muss der Bediener sich zwar nicht mehr ständig umdrehen, um die Funktion des Gutaufnehmers zu überwachen, dafür muss er aber seine Aufmerksamkeit auf den Monitor richten.

Schließlich wurde vorgeschlagen, an unterschiedlichen Stellen von Erntemaschinen Kameras anzubringen, die den Gutfluss optisch überwachen. Gemäß der DE 10 2005 005 557 A1 überwacht die Kamera bei einem Ladewagen das aufgenommene, in den Ladebehälter hinein geförderte Erntegut und ist mit einem Bildverarbeitungssystem verbunden, das wiederum selbsttätig Funktionen des Ladewagens steuert, z. B. die Geschwindigkeit des Kratzbodenantriebs. In der US 6 119 442 A1 wird ein Mähdrescher mit an verschiedenen Stellen angebrachten Kameras beschrieben, die mit Bildverarbeitungssystemen verbunden sind, welche wiederum Einstellungen der Erntemaschine kontrollieren. So ist eine Kamera auf den Erntevorsatz gerichtet, um die Menge des einlaufenden Ernteguts zu erfassen, die wiederum zur Einstellung der Vortriebsgeschwindigkeit, Dreschrotorgeschwindigkeit, Verbrennungsmotorgeschwindigkeit, Haspelgeschwindigkeit und Schrägförderergeschwindigkeit dient. Analog wird gemäß der US 2005/0279070 A1 die Vortriebsgeschwindigkeit eines Feldhäckslers basierend auf dem Signal einer Kamera angesteuert, welche die Menge des vor dem Feldhäcksler befindlichen Ernteguts erfasst. Gemäß diesen Dokumenten dient das Sensorsignal zur Ansteuerung von Funktionen der Erntemaschine, aber nicht zur Überwachung der korrekten Aufnahme des Ernteguts.

Die EP 1 574 124 A1 beschreibt eine Ballenpresse mit einem Aufnehmer und einem stromab davon angeordneten Rotor, der mit einer verschiebbaren Platte einen Spalt bildet, durch den Erntegut gefördert wird. Die Platte ist in Umfangsrichtung des Rotors verschiebbar und ihre Position wird durch einen Sensor erfasst, der ggf. eine Überlastsituation erkennen kann.

### Aufgabe

Das der Erfindung zugrunde liegende Problem wird darin gesehen, dem Bediener einer Erntemaschine die Überwachung der korrekten Funktion einer Erntegutaufnahmeeinrichtung zu erleichtern.

### Lösung

Dieses Problem wird erfindungsgemäß durch die Lehre der Patentansprüche 1 und 8 gelöst, wobei in den weiteren Patentansprüchen Merkmale aufgeführt sind, die die Lösung in vorteilhafter Weise weiterentwickeln.

Eine Vorrichtung zur Überwachung der korrekten Funktion einer Erntegutaufnahmeeinrichtung umfasst einen Sensor, der einen in der Vorwärtsbewegungsrichtung der Erntegutaufnahmeeinrichtung davor liegenden Bereich überwacht und ein Signal liefert, aus dem ableitbar ist, ob sich im ordnungsgemäßen Betrieb nicht auftretende Erntegutansammlungen an der Erntegutaufnahmeeinrichtung bilden. Der Sensor ist mit einer Signalverarbeitungseinrichtung verbunden, die betreibbar ist, aus den Signalen des Sensors eine Information darüber abzuleiten, ob sich die erwähnten Erntegutansammlungen bilden. Im diesem Falle gibt die Signalverarbeitungseinrichtung ein Fehlersignal ab, das dem Bediener der Erntemaschine optisch und/oder akustisch angezeigt werden kann und/oder ein selbsttätiges Anhalten der Erntemaschine veranlasst.

Die Signalverarbeitungseinrichtung erkennt anhand der Signale des Sensors im ordnungsgemäßen Betrieb nicht auftretende Erntegutansammlungen, die die Erntegutaufnahmeeinrichtung vor sich herschiebt, zum Beispiel an ihren äußeren Enden. Da es sich bei den Erntegutansammlungen um Erntegut handelt, dass sich gegenüber der Erntegutaufnahmeeinrichtung nicht bewegt, aber gegenüber dem Erdboden, dient die Bewegung für die Signalverarbeitungseinrichtung als Kriterium für eine unerwünschte Erntegutansammlung.

Als Sensor findet ein optischer Sensor Verwendung, beispielsweise eine auf einen Bereich vor der Erntegutaufnahmeeinrichtung gerichtete, zwei- oder dreidimensional arbeitende Kamera oder ein den Bereich vor der Erntegutaufnahmeeinrichtung abtastender Laserentfernungsmesser.

Auf diese Weise wird der Bediener von seiner Aufgabe der Überwachung der Erntegutaufnahmeeinrichtung entlastet, was ihm die Arbeit wesentlich erleichtert.

Im Falle, dass sich in unerwünschter Weise Erntegut ansammelt, kann diese Ansammlung durch den Bediener (oder selbsttätig) leicht beseitigt werden, indem die Erntegutaufnahmeeinrichtung angehoben wird, so dass sie über das auf dem Erdboden verbleibende Erntegut hinweg fährt, oder die Erntemaschine mit der Erntegutaufnahmeeinrichtung zurückgesetzt wird, so dass sich das Erntegut von der Erntegutaufnahmeeinrichtung löst und bei einer zweiten Überfahrt problemlos aufgenommen werden kann. Dadurch vermeidet man größere Probleme durch das angesammelte Erntegut, beispielsweise wenn das angesammelte Erntegut sich löst, als Bündel oder Klumpen von der Erntemaschine aufgenommen wird und dort einen Gutstau verursacht, der in aufwändiger Weise zu entfernen ist. Somit wird die Produktivität der Erntemaschine vergrößert.

Es sei noch angemerkt, dass die Signalverarbeitungseinrichtung bei geeigneter Ausbildung aus den Signalen des Sensors auch erkennen kann, wenn sich größere Erntegutansammlungen der Erntegutaufnahmeeinrichtung nähern (bzw. umgekehrt), so dass sie auch in diesem Fall ein Fehlersignal abgeben kann, um vorausschauend eine Verstopfung der Erntegutaufnahmeeinrichtung zu verhindern.

Die vorliegende Erfindung eignet sich besonders für Erntegutaufnahmeeinrichtungen in Form von Gutaufnehmern, die üblicherweise an Mähdreschern, Feldhäckslern, Ballenpressen oder Ladewagen verwendet werden, die jeweils von einem Fahrzeug bewegt oder selbstfahrend ausgeführt sein können.

### Ausführungsbeispiel

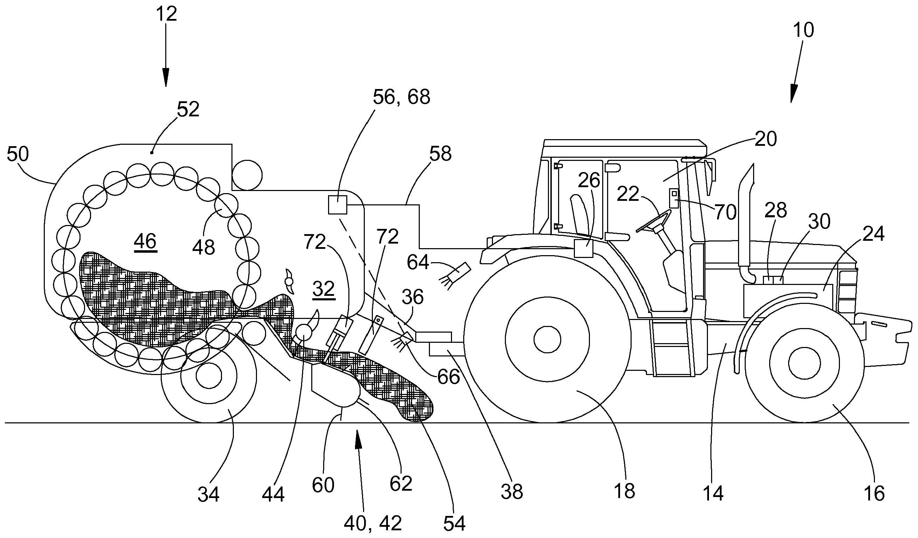

In der Zeichnung ist ein nachfolgend näher beschriebenes Ausführungsbeispiel der Erfindung dargestellt. Sie zeigt eine schematische seitliche Ansicht einer Kombination aus einem Fahrzeug in Form eines Traktors und einer Erntemaschine in Form einer Rundballenpresse, deren Erntegutaufnahmeeinrichtung mit einer Vorrichtung zur Überwachung ihrer korrekten Funktion ausgestattet ist.

Die dargestellte Kombination setzt sich aus einem Zugfahrzeug 10 in Form eines Traktors und einer Erntemaschine 12 in Form einer Rundballenpresse zusammen. Das Zugfahrzeug 10 umfasst ein mit einem Rahmen ausgestattetes Fahrgestell 14, das sich über vordere, lenkbare Räder 16 und hintere, antreibbare Räder 18 auf dem Erdboden abstützt. Am Fahrgestell 14 sind eine Kabine 20 mit einem Bedienerarbeitsplatz, an dem ein Sitz (nicht gezeigt) und ein Lenkrad 22 angeordnet sind, und ein Verbrennungsmotor 24 befestigt. Die Kurbelwelle des Verbrennungsmotors 24 ist mit einem Zapfwellengetriebe verbunden, das wiederum über eine Zapfwelle die Erntemaschine 12 antreibt. Eine elektronische Steuereinheit 26 ist elektrisch mit einer Motorsteuerung 28, die Betriebsparameter des Verbrennungsmotors 24 kontrolliert und steuert, und mit einer Vortriebssteuerung 30 des Zugfahrzeugs 10 verbunden. Der Verbrennungsmotor 24 treibt über ein weiteres, nicht dargestelltes Getriebe auch die Räder 18 und ggf. 16 an.

Die Erntemaschine 12 umfasst ein Fahrgestell 32, das sich über Räder 34 auf dem Erdboden abstützt und über eine Deichsel 36 mit einer Anhängekupplung 38 des Zugfahrzeugs 10 verbunden ist. Die Erntemaschine 12 umfasst eine Erntegutaufnahmeeinrichtung 40 in Form eines auch als Pickup bezeichneten Gutaufnehmers 42, der auf dem Feld liegendes Erntegut oberschlächtig fördert und einem Rotor 44 zuführt, der es in einen Ballenpressraum 46 fördert. Der Ballenpressraum 46 ist durch Walzen 48 umschlossen. Im rückwärtigen Bereich der Erntemaschine 12 ist eine nach hinten und oben aufschwenkbare Rücktür 50 vorgesehen, die zum Auswurf eines fertig gestellten Ballens um eine horizontal und quer zur Vorwärtsrichtung verlaufende Achse 52 an der Oberseite des Fahrgestells 32 angelenkt ist. Die Walzen 48, der Rotor 44 und der Gutaufnehmer 42 stehen über eine Antriebswelle mit dem Zapfwellenausgang des Zugfahrzeugs 10 in Antriebsverbindung. Eine elektronische Steuereinheit 56 der Erntemaschine 12 ist mit Aktoren und Sensoren der Erntemaschine 12 verbunden und kommuniziert über einen Bus 58 mit der Steuereinheit 26 des Zugfahrzeugs 10.

Beim Erntevorgang fördert der Gutaufnehmer 42 mit seinen Zinken 60, die in an sich bekannter Weise an einem rotierenden Rotor montiert sind und sich durch Zwischenräume zwischen Abstreifblechen 62 erstrecken, auf einem Feld liegendes Erntegut 54, das in der Regel in einem Schwad abgelegt wurde, in die Erntemaschine 12 hinein. Unter bestimmten Bedingungen kann es jedoch passieren, dass die Zinken 60 des Gutaufnehmers 42 nicht das gesamte Erntegut erfassen, so dass sich stromauf des Gutaufnehmers 42 Erntegutansammlungen bilden, wie in der Figur angedeutet. Derartige Erntegutansammlungen bilden sich oft an den seitlichen Enden des Gutaufnehmers 42. Bisher ist es zur Vermeidung derartiger Erntegutansammlungen und deren unerwünschter Folgen (Erntegutverlust, wenn sich die Erntegutansammlung ablöst und seitlich am Gutaufnehmer 42 vorbeiläuft, oder Gutstaus in der Erntemaschine 12, wenn die Erntegutansammlung auf einmal vom Gutaufnehmer 42 als Bündel oder Klumpen aufgenommen wird) erforderlich, dass der Bediener in der Kabine 20 sich regelmäßig umdreht, um den Gutaufnehmer 42 auf ordnungsgemäße Funktion zu überwachen, oder es wird eine Kamera 64 an der Rückseite des Zugfahrzeugs 10 oder an der Deichsel 36 montiert, deren Bild der Bediener in der Kabine 20 auf einem Monitor beobachten kann. Beide Alternativen lenken den Bediener von seiner eigentlichen Aufgabe ab, das Zugfahrzeug 10 zu lenken und die Funktion der Erntemaschine 12 zu überwachen.

Gemäß der vorliegenden Erfindung ist mindestens ein Sensor 64, 66, 72 vorgesehen, welcher den Gutaufnehmer 42 und den in Vorwärtsrichtung des Zugfahrzeugs 10, die in der Figur nach rechts verläuft, vor dem Gutaufnehmer 42 liegenden Bereich überwacht. In der dargestellten Ausführungsform ist der Sensor 64 als zwei- oder dreidimensional arbeitende Kamera ausgeführt und bei dem Sensor 66 handelt es sich um einen Ultraschall-Abstandssensor. Der Sensor 64 ist an der Rückseite des Zugfahrzeugs 10 montiert, beispielsweise an einem Kotflügel oder an der Kabine 20, insbesondere ihrem Dach. Der Sensor 66 ist in der dargestellten Ausführungsform an der Deichsel 36 der Erntemaschine 12 befestigt. Der Sensor 72 ist ein mechanischer Fühler, der an seiner Oberseite um eine sich horizontal und quer zur Vorwärtsrichtung verlaufende Achse pendelnd aufgehängt ist und dessen Winkel um die Pendelachse erfasst wird.

Die Sensoren 64, 66, 72 sind über den Bus 58 oder separate Leitungen mit der Steuereinheit 56 verbunden, die auch als Signalverarbeitungseinrichtung 68 zur Verarbeitung der Signale der Sensoren 64, 66, 72 dient. Die Signalverarbeitungseinrichtung 68 verarbeitet im Erntebetrieb die Signale der Sensoren 64, 66, 72 und leitet daraus ab, ob sich die beschriebene Erntegutansammlung stromauf des Gutaufnehmers 42 gebildet hat. Eine derartige Erntegutansammlung ist beispielsweise daran erkennbar, dass der Sensor 66 einen Abstand erfasst, der kleiner als ein bestimmter Schwellenwert ist. Außerdem ist eine derartige Erntegutansammlung daran erkennbar, dass der Gutaufnehmer 42 im Bild des Sensors 64 eine Erntegutmenge vor sich herschiebt, die eine bestimmte Größe (Fläche oder Volumen) überschreitet, was durch ein im der Signalverarbeitungseinrichtung 68 laufendes Bildverarbeitungsprogramm anhand der identifizierbaren Position des im Bild gezeigten Gutaufnehmers 42 und des sich gegenüber dem Gutaufnehmer 42 nicht bewegenden Ernteguts feststellbar ist. Beim Sensor 72 ist eine Erntegutansammlung anhand des Winkels um die Pendelachse feststellbar, die einen vorbestimmten Wert überschreitet.

Anstelle der beschriebenen Sensortypen (oder zusätzlich dazu) können auch ein- oder zweidimensional abtastende Laser-Entfernungsmesser verwendet werden, die die Höhe und vorzugsweise auch die horizontale Erstreckung des Ernteguts in Vorwärtsrichtung erfassen, das sich an der Vorderseite des Gutaufnehmers 42 ansammelt, wobei ein Fehlersignal gegeben wird, wenn die Höhe und/oder horizontale Erstreckung des Ernteguts einen vorbestimmten Schwellenwert überschreitet.

Falls die Signalverarbeitungseinrichtung 68 nun eine im ordnungsgemäßen Betrieb nicht auftretende Erntegutansammlung am Gutaufnehmer 42 identifiziert hat, übersendet sie über den Bus 58 ein Fehlersignal an die Steuereinheit 26 des Zugfahrzeugs 10. Letztere gibt mittels einer am Bedienerarbeitsplatz angeordneten Bedieneranzeigeeinrichtung 70 ein akustisches und ein optisches Warnsignal ab, um den Bediener über die Erntegutansammlung zu informieren. Außerdem veranlasst die Steuereinheit 26 dann die Vortriebssteuerung 30, das Zugfahrzeug 10 anzuhalten. Der Bediener kann dann absteigen und die Erntegutansammlung manuell beseitigen. Bei einer fortgeschrittenen Ausführungsform kann die Signalverarbeitungseinrichtung 68 auch über die Steuereinrichtung 56 einen Aktor 72 veranlassen, den Gutaufnehmer 42 anzuheben, so dass er einfach über die Erntegutansammlung hinweg fährt, oder über den Bus 58 und die Steuerung 26 das Zugfahrzeug 10 verlassen, ein bestimmtes Stück zurückzusetzen, um die Erntegutansammlung im zweiten Anlauf mit dem Gutaufnehmer 42 aufzunehmen.

Im Ergebnis ist durch die Sensoren 64 und/oder 66 und die Signalverarbeitungseinrichtung 68 eine selbsttätige Erkennung einer Erntegutansammlung an der Vorderseite des Gutaufnehmers 42 ermöglicht worden, was die Arbeit des Bedieners wesentlich vereinfacht.

## Patentansprüche

1. Vorrichtung zur Überwachung der korrekten Funktion einer Erntegutaufnahmeeinrichtung (40), mit einem einen in Vorwärtsrichtung vor der Erntegutaufnahmeeinrichtung (40) liegenden Bereich überwachenden, optischen Sensor (64), der mit einer Signalverarbeitungseinrichtung (68) verbunden ist, **dadurch gekennzeichnet, dass** die Signalverarbeitungseinrichtung (68) betreibbar ist, anhand der Signale des Sensors (64) sich gegenüber der Erntegutaufnahmeeinrichtung (40) nicht bewegendes Erntegut, welches die Erntegutaufnahmeeinrichtung (40) vor sich herschiebt, als eine im ordnungsgemäßen Betrieb nicht auftretende Erntegutansammlung zu erkennen und im Falle einer erkannten Erntegutansammlung ein Fehlersignal abzugeben.

2. Vorrichtung nach Anspruch 1, **dadurch gekennzeichnet, dass** die Signalverarbeitungseinrichtung (68) mit einer Warneinrichtung verbunden ist, die bei Vorliegen eines Fehlersignals einen Bediener eines Fahrzeugs (10) akustisch und/oder optisch über die Erntegutansammlung informiert.

3. Vorrichtung nach Anspruch 1 oder 2, **dadurch gekennzeichnet, dass** die Signalverarbeitungseinrichtung (68) mit einer Vortriebssteuerung (30) eines Fahrzeugs (10) verbunden ist, die bei Vorliegen eines Fehlersignals ein Anhalten des Fahrzeugs (10) veranlasst.

4. Vorrichtung nach einem der Ansprüche 1 bis 3, **dadurch gekennzeichnet, dass** die Vorrichtung eingerichtet ist, das angesammelte Erntegut selbsttätig zu entfernen, beispielsweise durch ein Anheben oder Zurücksetzen der Erntegutaufnahmeeinrichtung (40).

5. Vorrichtung nach einem der Ansprüche 1 bis 4, **dadurch gekennzeichnet, dass** Signalverarbeitungseinrichtung (68) betreibbar ist, anhand der Signale des Sensors (64) an den äußeren Enden vor der Erntegutaufnahmeeinrichtung (40) her geschobene Erntegutansammlungen zu erkennen und ggf. das Fehlersignal abzugeben.

6. Vorrichtung nach einem der Ansprüche 1 bis 5, **dadurch gekennzeichnet, dass** der Sensor (64) eine auf einen Bereich vor der Erntegutaufnahmeeinrichtung (40) gerichtete, zwei- oder dreidimensional arbeitende Kamera oder einen den Bereich vor der Erntegutaufnahmeeinrichtung (40) abtastenden Laserentfernungsmesser umfasst.

7. Vorrichtung nach einem der Ansprüche 1 bis 6, **dadurch gekennzeichnet, dass** die Signalverarbeitungseinrichtung (68) betreibbar ist, ein Fehlersignal abzugeben, wenn die vom Sensor (64) erfasste Höhe und/oder horizontale Erstreckung des Ernteguts in Vorwärtsrichtung einen vorbestimmten Schwellenwert überschreitet.

8. Selbstfahrende Erntemaschine oder Kombination aus einem Zugfahrzeug (10) mit einer Erntemaschine (12), wobei die Erntemaschine (12) eine Erntegutaufnahmeeinrichtung (40) umfasst und eine Vorrichtung nach einem der vorhergehenden Ansprüche vorhanden ist.

9. Selbstfahrende Erntemaschine oder Kombination aus einem Zugfahrzeug (10) mit einer Erntemaschine (12) nach Anspruch 8, **dadurch gekennzeichnet, dass** die Erntegutaufnahmeeinrichtung (42) ein Gutaufnehmer (42) ist.

10. Selbstfahrende Erntemaschine oder Kombination aus einem Zugfahrzeug (10) mit einer Erntemaschine (12) nach Anspruch 8 oder 9, **dadurch gekennzeichnet, dass** die Erntemaschine (12) ein Mähdrescher oder ein Feldhäcksler oder eine Ballenpresse oder ein Ladewagen ist.

## Claims

1. Device for monitoring the correct functioning of a crop collecting apparatus (40), having an optical sensor (64) which monitors a region lying in front of the crop collecting apparatus (40) in the forward direction and is connected to a signal processing apparatus (68), **characterized in that** the signal processing apparatus (68) can be operated to detect, on the basis of the signals of the sensor (64), crop which is not moving with respect to the crop collecting apparatus (40) and which the crop collecting apparatus (40) is pushing ahead of itself, as a crop accumulation which does not occur in the correct mode, and to output a fault signal in the case of a detected crop accumulation.

2. Device according to Claim 1, **characterized in that** the signal processing apparatus (68) is connected to a warning apparatus which, when a fault signal is present, informs an operator of a vehicle (10) acoustically and/or optically about the crop accumulation.

3. Device according to Claim 1 or 2, **characterized in that** the signal processing apparatus (68) is connected to a propulsion controller (30) of a vehicle (10), which propulsion controller (30) causes the vehicle (10) to stop when a fault signal is present.

4. Device according to one of Claims 1 to 3, **characterized in that** the device is configured to remove the collected crop automatically, for example by lifting or resetting the crop collecting apparatus (40).

5. Device according to one of Claims 1 to 4, **characterized in that** the signal processing apparatus (68) can be operated to detect, on the basis of the signals of the sensor (64), crop accumulations which have been pushed away in front of the crop collecting apparatus (40) at the outer ends, and if appropriate to output the fault signal.

6. Device according to one of Claims 1 to 5, **characterized in that** the sensor (64) comprises a camera which is directed toward a region in front of the crop collecting apparatus (40) and operates two-dimensionally or three-dimensionally, or a laser distance meter which scans the region in front of the crop collecting apparatus (40).

7. Device according to one of Claims 1 to 6, **characterized in that** the signal processing apparatus (68) can be operated to output a fault signal if the height and/or horizontal extent of the crop sensed by the sensor (64) in the forward direction exceeds a predetermined threshold value.

8. Self-propelling harvesting machine or combination of a tractor vehicle (10) with a harvesting machine (12), wherein the harvesting machine (12) comprises a crop collecting apparatus (40), and a device according to one of the preceding claims is present.

9. Self-propelling harvesting machine or combination of a tractor vehicle (10) with a harvesting machine (12) according to Claim 8, **characterized in that** the crop collecting apparatus (42) is a pickup (42).

10. Self-propelling harvesting machine or combination of a tractor vehicle (10) with a harvesting machine (12) according to Claim 8 or 9, **characterized in that** the harvesting machine (12) is a combine harvester or a field chopper or a bale press or loading vehicle.

## Revendications

1. Dispositif de surveillance du fonctionnement correct d'un dispositif de réception de produits de récolte (40), comportant un capteur optique (64) qui surveille une zone située à l'avant du dispositif de réception de produits de récolte (40) et qui est relié à un dispositif de traitement de signaux (68), **caractérisé en ce que** le dispositif de traitement de signaux (68) peut être mis en œuvre pour détecter, à l'aide des signaux du capteur (64), un produit de récolte qui ne se déplace pas par rapport au dispositif de réception de produits de récolte (40) et qui pousse devant lui le dispositif de réception de produits de récolte (40) sous la forme d'une accumulation de produits de récolte qui ne survient pas lors d'un fonctionnement correct et, dans le cas d'une accumulation détectée de produits de récolte, pour délivrer un signal d'erreur.

2. Dispositif selon la revendication 1, **caractérisé en ce que** le dispositif de traitement de signaux (68) est relié à un dispositif d'avertissement qui, en présence d'un signal d'erreur, informe acoustiquement et/ou optiquement l'opérateur d'un véhicule (10) de l'accumulation de produits de récolte.

3. Dispositif selon la revendication 1 ou 2, **caractérisé en ce que** le dispositif de traitement de signaux (68) est relié à un système de commande de propulsion (30) d'un véhicule (10) qui provoque l'arrêt du véhicule (10) lors de la présence d'un signal d'erreur.

4. Dispositif selon l'une des revendications 1 à 3, **caractérisé en ce que** le dispositif est conçu pour enlever automatiquement le produit de récolte recueilli, par exemple en soulevant ou en réinitialisant le dispositif de réception de produits de récolte (40).

5. Dispositif selon l'une des revendications 1 à 4, **caractérisé en ce que** le dispositif de traitement de signaux (68) peut être mis en œuvre pour détecter, à l'aide des signaux du capteur (64), des accumulations de produits de récolte poussées aux extrémités extérieures, à l'avant du dispositif de réception de produits de récolte (40), et le cas échéant, pour délivrer le signal d'erreur.

6. Dispositif selon l'une des revendications 1 à 5, **caractérisé en ce que** le capteur (64) comprend une caméra fonctionnant en deux ou trois dimensions dirigée vers une zone située à l'avant du dispositif de réception de produits de récolte (40) ou un dispositif de mesure de distance à laser qui analyse la zone située à l'avant du dispositif de réception de produits de récolte (40).

7. Dispositif selon l'une des revendications 1 à 6, **caractérisé en ce que** le dispositif de traitement de signaux (68) peut être mis en œuvre pour délivrer un signal d'erreur lorsque la hauteur et/ou l'étendue horizontale du produit de récolte vers l'avant détectée par le capteur (64) dépasse une valeur de seuil prédéterminée.

8. Machine de récolte automotrice ou combinaison d'un véhicule tracteur (10) avec une machine de récolte (12), dans laquelle la machine de récolte (12) comprend un dispositif de réception de produits de récolte (40) et dans lequel il est prévu un dispositif selon l'une des revendications précédentes.

9. Machine de récolte automotrice ou combinaison d'un véhicule tracteur (10) avec une machine de récolte (12) selon la revendication 8, **caractérisée en ce que** le dispositif de réception de produits de récolte (42) est un réceptacle à produits (42).

10. Machine de récolte automotrice ou combinaison d'un véhicule tracteur (10) avec une machine de récolte (12) selon la revendication 8 ou 9, **caractérisée en ce que** la machine de récolte (12) est une moissonneuse-batteuse ou une ensileuse ou une presse à balles ou un chariot de chargement.
